# EUROPÄISCHE PATENTSCHRIFT

(11) **EP 1 807 760 B1**
(45) Veröffentlichungstag und Bekanntmachung des Hinweises auf die Patenterteilung: **17.09.2008**
(21) Anmeldenummer: 05811130.3
(22) Anmeldetag: 25.10.2005
(51) Int. Cl.: G06F 11/00

(54) **DATENVERARBEITUNGSSYSTEM MIT VARIABLER TAKTRATE**
DATA PROCESSING SYSTEM WITH A VARIABLE CLOCK SPEED
SYSTEME DE TRAITEMENT DE DONNEES A FREQUENCE D'HORLOGE VARIABLE

(30) Priorität: 25.10.2004 DE 102004051950; 25.10.2004 DE 102004051992; 23.09.2005 DE 102005045399
(43) Veröffentlichungstag der Anmeldung: 18.07.2007
(73) Patentinhaber: ROBERT BOSCH GMBH, 70442 Stuttgart (DE)
(72) Erfinder: COLLANI, Yorck, 71717 Beilstein (DE); KOTTKE, Thomas, 71139 Ehningen (DE)
(86) Internationale Anmeldenummer: PCT/EP2005/055549
(87) Internationale Veröffentlichungsnummer: WO 2006/045807

(56) Entgegenhaltungen:
- EP-A- 0 564 836
- EP-A- 0 785 498
- US-A- 6 020 751
- US-A1- 2001 018 752
- US-A1- 2002 038 418
- US-A1- 2003 226 084

## Beschreibung

### Stand der Technik

Die vorliegende Erfindung betrifft ein Datenverarbeitungssystem mit einer getaktet arbeitenden Ausführungseinheit wie etwa einem Mikroprozessor, einem Taktgenerator zum Liefern eines Taktsignals für die Ausführungseinheit und einer Überwachungseinheit zum Überwachen des ordnungsgemäßen Arbeitens der Ausführungseinheit.

Solche Überwachungseinheiten, die auch unter der Bezeichnung "Watchdog" bekannt sind, dienen herkömmlicherweise dazu, einen undefinierten Zustand bzw. Absturz der Ausführungseinheit zu erkennen und erforderlichenfalls die Ausführungseinheit zurückzusetzen, um einen definierten Betriebszustand wieder herzustellen. Ein solcher "Watchdog" ist in der Lage, unter Inkaufnahme einer zeitweiligen Betriebsunterbrechung der Ausführungseinheit während des Zurücksetzens einen Störungszustand zu beheben, der sich aus einem spontanen Verarbeitungsfehler, z. B. auf Grund von Informationsverlust durch den Einfluss von kosmischer oder sonstiger ionisierender Strahlung oder dergleichen ergeben kann. Strukturelle Mängel des Datenverarbeitungssystems von schaltungstechnischer oder programmtechnischer Art, die zu reproduzierbaren Fehlern in der Verarbeitung führen, können von einem solchen "Watchdog" nicht abgefangen werden, da dieser das Auftreten der in vorhersagbarer Weise zu dem Fehler führenden Bedingungen nicht verhindern kann.

Eine weitere mögliche Ursache für Verarbeitungsfehler in einem elektronischen Datenverarbeitungssystem sind Laufzeiteffekte. Da sich die elektrischen Signale auf einem Halbleiterchip oder zwischen mehreren Chips eines Datenverarbeitungssystems nur mit einer bestimmten Geschwindigkeit ausbreiten können, müssen die Längen der Signalwege um so geringer und um so genauer aufeinander abgestimmt sein, je höher die Taktfrequenz ist, bei der das System betrieben wird. Parasitäre Kapazitäten an den Signalleitungen können Änderungen der Signalpegel verzögern. Da diese parasitären Kapazitäten fertigungsbedingt streuen können, ist es üblich wie z.B. in Dokument US 2002/0038418 beschrieben, bei der Produktion eines Prozessors zu testen, wie hoch die maximale Taktfrequenz ist, bei der der Prozessor sicher arbeitet. Für diese Frequenz (abzüglich eines Sicherheitsabstands) wird der Prozessor freigegeben, und es wird davon ausgegangen, dass er bei dieser freigegebenen maximalen Frequenz und darunter liegenden Taktfrequenzen sicher betrieben werden kann.

Es ist bereits vorgeschlagen worden, Prozessoren für netzunabhängige Anwendungen je nach Auslastungsgrad bei unterschiedlichen Taktfrequenzen zu betreiben. Ziel dieser Maßnahme ist eine Minimierung der Leistungsaufnahme des Prozessors. Da diese linear mit der Taktfrequenz zunimmt, ist es an sich wünschenswert, den Prozessor bei einer Taktrate zu betreiben, die nicht höher ist, als zur Bewältigung der aktuellen Aufgaben des Prozessors erforderlich.

Man kann feststellen, dass Alterungserscheinungen von elektronischen Bauelementen zu einer Zunahme der Wahrscheinlichkeit von spontanen Verarbeitungsfehlern in einem Datenverarbeitungssystem führen. Diese Steigerung kann zum Beispiel erklärt werden durch langfristige Veränderungen an Grenzflächen der Halbleitersubstrate, auf denen die Schaltungen implementiert sind, und die zu Veränderungen der parasitären Kapazitäten führen, welche die Schaltungen belasten. Auch eine Migration von Dotiermaterial in Schaltungselementen kann bei hohen Betriebstemperaturen nicht ausgeschlossen werden, wobei die Wirkungen einer solchen Migration um so stärker sind, je kleiner die auf den Halbleitersubstraten gebildeten Strukturen sind. In Anbetracht der Entwicklung zu immer höheren Integrationsdichten ist daher mit einer zunehmenden Bedeutung von alterungsbedingten Zuverlässigkeitsproblemen zu rechnen.

### Vorteile der Erfindung

Durch die vorliegende Erfindung, wie in den unabhängigen Ansprüche 1 und 4 definiert, wird ein Datenverarbeitungssystem geschaffen, welches trotz der oben geschilderten Probleme langfristig ein hohes Maß an Betriebsicherheit garantiert und dadurch insbesondere für sicherheitskritische Anwendungen gut geeignet ist, bei denen es wichtig ist, spontane Funktionsausfälle soweit wie möglich zu vermeiden.

Diese vorteile werden bei einem Datenverarbeitungssystem mit einer getaktet arbeitenden Ausführungseinheit, einem Taktgenerator zum Liefern eines Taktsignals für die Ausführungseinheit und einer Überwachungseinheit zum Überwachen des ordnungsgemäßen Arbeitens der Ausführungseinheit, wobei der Taktgenerator eingerichtet ist, das Taktsignal mit einer steuerbaren Frequenz zu liefern und wobei die Überwachungseinheit funktionsmäßig mit dem Taktgenerator verbunden ist, um die Frequenz des Taktsignals herabzusetzen, wenn nichtordnungsgemäßes Arbeiten der Ausführungseinheit festgestellt wird, dadurch erreicht, dass die Überwachungseinheit eingerichtet ist, eine Testverarbeitung von der Verarbeitungseinheit bei einer aktuellen Taktrate (fₙₒₘ) und einer gegenüber der aktuellen Taktrate erhöhten Taktrate (fₙₒₘ+Δ) ausführen zu lassen und nichtordnungsgemäßes Arbeiten der Ausführungseinheit festzustellen, wenn das Ergebnis der bei der aktuellen Taktrate durchgeführten Testverarbeitung und das Ergebnis der bei der erhöhten Taktrate (fₙₒₘ+Δ) durchgeführten Testverarbeitung sich unterscheiden.

Diese Vorteile werden auch bei einem Datenverarbeitungssystem mit einer getaktet arbeitenden Ausführungseinheit, einem Taktgenerator zum Liefern eines Taktsignals für die Ausführungseinheit und einer Überwachungseinheit zum Überwachen des ordnungsgemäßen Arbeitens der Ausführungseinheit, wobei der Taktgenerator eingerichtet ist, das Taktsignal mit einer steuerbaren Frequenz zu liefern und wobei die Überwachungseinheit funktionsmäßig mit dem Taktgenerator verbunden ist, um die Frequenz des Taktsignals herabzusetzen, wenn nichtordnungsgemäßes Arbeiten der Ausführungseinheit festgestellt wird, dadurch erreicht, dass die Überwachungseinheit eine zweite Ausführungseinheit und Mittel zum vergleichen der Verarbeitungsergebnisse der zwei Ausführungseinheiten umfasst und eingerichtet ist, nichtordnungsgemäßes Arbeiten bei Nichtübereinstimmung der Ergebnisse festzustellen, dass der Taktgenerator eingerichtet ist, die Taktrate zeitweilig über eine aktuelle Taktrate zu erhöhen und bei Feststellung von nichtordnungsgemäßem Arbeiten bei der erhöhten Taktrate die Taktrate unter besagte aktuelle Taktrate abzusenken.

Es wird davon ausgegangen, dass die oben erläuterten parasitären Kapazitäten oder die eventuell durch Dotierungsmigration verursachte Verringerung der Effizienz von Schaltungsbauteilen für einen wesentlichen Teil von im Datenverarbeitungssystem auftretenden spontanen Fehlern verantwortlich ist. Indem im Fall des Auftretens solcher Fehler die Taktrate herabgesetzt wird, wird lediglich ein Teil der Rechenkapazität, die das System unter optimalen Bedingen erreichen könnte, preisgegeben, die allgemeine Zuverlässigkeit des Systems bleibt jedoch erhalten.

Um im Falle einer Reduzierung der Taktrate eine auf dem Datenverarbeitungssystem laufende Nutzanwendung, die wenigstens zeitweise die mit einer ursprünglich spezifizierten hohen Taktrate erzielbare Rechenleistung des Systems voll ausschöpft, lauffähig zu erhalten, sollte die Nutzanwendung zweckmäßigerweise in eine Mehrzahl von Funktionen gegliedert sein, wobei die Ausführung wenigstens einer der Funktionen, die als im Notfall verzichtbar beurteilt wird, in Abhängigkeit von der aktuellen Taktrate des Systems zur Ausführung freigegeben oder nicht freigegeben ist.

Die Überwachungseinheit kann eine an sich bekannte Watchdog-Einheit umfassen, die nichtordnungsgemäßes Arbeiten der Ausführungseinheit feststellt, wenn ein Funktionssignal von der Ausführungseinheit in einer vorgegebenen Zeitspanne ausbleibt, die aber im Falle des Ausbleibens nicht in herkömmlicher Weise das Datenverarbeitungssystem zurücksetzt, sondern lediglich die Herabsetzung der Frequenz des Taktsignals veranlasst.

Die Überwachungseinheit, die die Ausführung der Testverarbeitung steuert, kann einfach und preiswert auf programmtechnischem Wege in der Ausführungseinheit implementiert sein.

Das Datenverarbeitungssystem sollte über Mittel zum Ausgeben eines Warnsignals bei Absenkung der Taktfrequenz unter eine untere Grenze verfügen.

Insbesondere kann es sich bei dem Datenverarbeitungssystem um ein Steuergerät für ein Kraftfahrzeug, insbesondere ein Motorsteuergerät handeln.

Gegenstand der Erfindung ist auch ein Verfahren gemäß Anspruch 8 zum Betreiben einer getaktet arbeitenden Ausführungseinheit eines Datenverarbeitungssystems nach einem Datenverarbeitungssystem der oben beschriebenen Art, bei dem die Ausführungseinheit auf ordnungsgemäßes Arbeiten bei einer hohen Taktfrequenz geprüft wird und die Taktrate gesenkt wird, wenn nichtordnungsgemäßes Arbeiten der Ausführungseinheit festgestellt wird, wobei die Prüfung regelmäßig wiederholt wird.

Die regelmäßige Prüfung kann insbesondere jeweils beim Ein- und/oder Ausschalten des Datenverarbeitungssystems oder periodisch während des Betriebs des Datenverarbeitungssystems vorgenommen werden.

Weitere Merkmale und Vorteile der Erfindung ergeben sich aus der nachfolgenden Beschreibung von Ausführungsbeispielen unter Bezugnahme auf die beigefügten Figuren.

### Figuren

- Fig. 1: ist ein Blockdiagramm eines Datenverarbeitungssystems gemäß einer ersten Ausgestaltung der Erfindung;
- Fig. 2: ist ein Flussdiagramm eines von dem Datenverarbeitungssystem der Fig. 1 ausgeführten Betriebsverfahrens; und
- Fig. 3: ist ein Blockdiagramm einer zweiten Ausgestaltung eines Datenverarbeitungssystems gemäß der Erfindung.

### Beschreibung der Ausführungsbeispiele

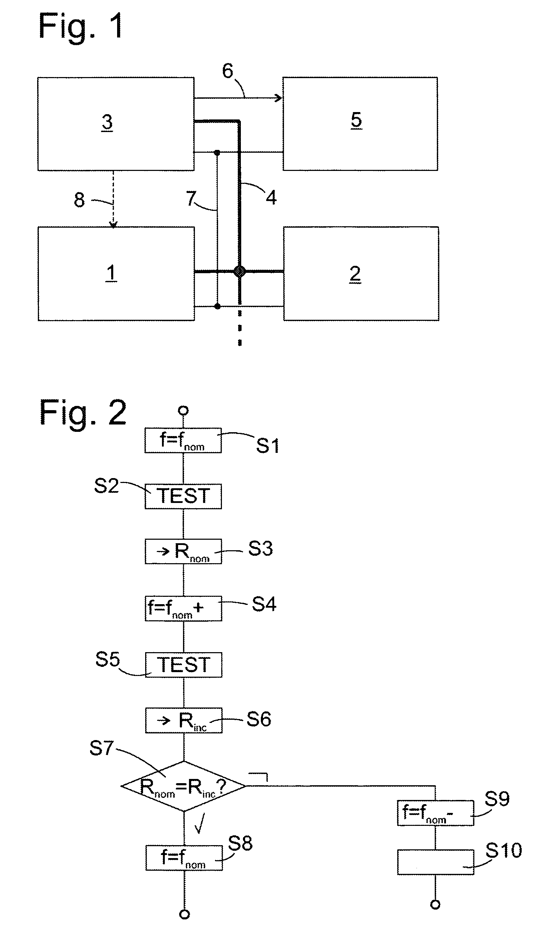

Das in Fig. 1 schematisch dargestellte Datenverarbeitungssystem umfasst einen Mikroprozessor 1, einen Arbeitsspeicher 2 und eine Überwachungseinheit 3, die über einen Daten- und Adressbus 4 miteinander sowie gegebenenfalls mit nicht gezeigten Peripherieeinheiten kommunizieren, die je nach Anwendung des Systems unterschiedlich sein können und zum Beispiel im Falle einer Anwendung als Motorsteuergerät diverse Sensoren zum Erfassen von Betriebsparametern des Motors und Aktoren zum Beeinflussen dieser oder anderer Parameter des Motors umfassen können. Das System umfasst ferner einen Taktgenerator 5, der ein Taktsignal mit einer von der Überwachungseinheit 3 über eine Steuerleitung 6 spezifizierten Frequenz über eine Taktleitung 7 an den Mikroprozessor 1, den Arbeitsspeicher 2 und die Überwachungseinheit 3 liefert.

Der Arbeitsspeicher 2 enthält Programmanweisungen einer von dem Mikroprozessor 1 auszuführenden Nutzanwendung sowie einer Testverarbeitung.

Der Mikroprozessor 1 ist vom Hersteller für eine Arbeits- Taktfrequenz spezifiziert. Unter normalen Betriebsbedingungen steuert die Überwachungseinheit 3 den Taktgenerator 5 an, um diese spezifizierte Taktfrequenz zu erzeugen, während der Mikroprozessor 1 die Nutzanwendung ausführt. Immer wenn das System eingeschaltet wird, im Falle eines als Motorsteuergerät arbeitenden Systems z. B. durch Drehen eines Zündschlüssels, führt der Mikroprozessor 1 vor Beginn der Nutzanwendung eine Initialisierung aus, deren Ablauf anhand von Fig. 2 erläutert wird. In einem ersten Schritt S1 setzt die Überwachungseinheit 3 die Taktfrequenz f des Taktgenerators auf die für den Mikroprozessor 1 spezifizierte Frequenz fₙₒₘ. Bei dieser Taktfrequenz führt der Mikroprozessor 1 in Schritt S2 die bereits erwähnte Testverarbeitung aus. Diese Testverarbeitung kann z. B. aus einer Folge von arithmetischen oder logischen Operationen bestehen, die an aus dem Arbeitsspeicher 2 gelesenen Konstanten durchgeführt werden und daher bei jeder Durchführung das gleiche Endergebnis liefern sollten. Der letzte Schritt S3 der Testverarbeitung ist ein Schreiben des Ergebnisses an eine Adresse, die der Überwachungseinheit 3 zugeordnet ist, so dass diese das Ergebnis Rₙₒₘ empfängt und zwischenspeichert.

Anschließend erhöht die Überwachungseinheit 3 die Taktfrequenz f auf fₙₒₘ+Δ (S4) und lässt den Mikroprozessor 1 die Testverarbeitung bei dieser erhöhten Taktfrequenz wiederholen (S5). Das Ergebnis R_{inc} wird auf diese Weise wiederum in die Überwachungseinheit 3 geschrieben (S6). Diese vergleicht nun in Schritt S7 die zwei empfangenen Ergebnisse Rₙₒₘ und R_{inc}. Bei Übereinstimmung wird davon ausgegangen, dass der Prozessor 1 bei beiden Taktfrequenzen, fₙₒₘ und fₙₒₘ+Δ, korrekt gearbeitet hat. In diesem Fall wird in Schritt S8 die Taktfrequenz f auf fₙₒₘ zurückgesetzt, und der Mikroprozessor 1 beginnt, die Nutzanwendung auszuführen.

Falls in Schritt S7 Nichtübereinstimmung der Ergebnisse festgestellt wird, so bedeutet dies, dass die erhöhte Taktfrequenz fₙₒₘ+Δ nicht betriebssicher ist. Um von dieser nichtbetriebssicheren Frequenz einen Sicherheitsabstand einzuhalten, wird in Schritt S9 eine neue, verringerte Betriebsfrequenz f = fₙₒₘ-Δ eingestellt. In Schritt S10 überprüft der Mikroprozessor 1 anhand einer vom Hersteller des Systems vorbeireiten und im Arbeitsspeicher 2 abgelegten Liste, ob die Nutzanwendung Funktionen enthält, deren Ausführung bei der reduzierten Taktrate gesperrt werden muss, um die Funktionsfähigkeit der Nutzanwendung in ihren wesentlichen Merkmalen aufrecht zu erhalten und unzulässig lange Reaktionszeiten der Nutzanwendung auf äußere Ereignisse zu verhindern und diese Funktionen gegebenenfalls zu sperren. Des weiteren wird in Schritt S10 eine Warnanzeige an einen Benutzer ausgegeben, wenn wenigstens eine der folgenden Bedingungen erfüllt ist:
a) eine abermalige Verringerung der Taktfrequenz um Δ würde die Sperrung wenigstens einer Funktion der Nutzanwendung erforderlich machen;
b) die Verringerung der Taktrate in Schritt S9 hat zur Sperrung einer Funktion geführt;
c) es sind bereits alle für die Nutzanwendung nicht lebenswichtigen Funktionen gesperrt, so dass eine weitere Verringerung der Taktrate nicht durch Sperrung weiterer Funktionen aufgefangen werden könnte, sondern zur Inoperabilität des gesamten Systems führen würde.

Die Schritte S1 bis S3 einerseits und S4 bis S10 andererseits müssen nicht unbedingt zeitlich aufeinanderfolgend ausgeführt werden. So ist es z. B. denkbar, die Schritte S1 bis S3 nur einmal während einer erstmaligen Inbetriebnahme des Systems durchzuführen und ihr Ergebnis Rₙₒₘ in der Überwachungseinheit 3 gespeichert zu halten, so dass spätere Prüfungen der Betriebssicherheit des Systems sich auf die Durchführung S4 bis S10 beschränken können.

Dies ist insbesondere dann zweckmäßig, wenn Überprüfungen der Betriebssicherheit auch periodisch bei laufendem System durchgeführt werden, da zum Durchführen der Schritte S4 bis S10 die Nutzanwendung nur etwa halb so lang unterbrochen werden muss wie für die Durchführung des gesamten in Fig. 2 gezeigten Verfahrens.

Um den Start der Nutzanwendung nicht durch die Betriebsicherheitsprüfung gemäß Fig. 2 zu verzögern, kann auch vorgesehen werden, dass diese Prüfung nicht jeweils bei Inbetriebnahme des Systems, sondern unmittelbar vor dessen Ausschalten durchgeführt wird, wobei natürlich in diesem genau wie im vorhergehenden Fall eine eventuell in Schritt S9 neu festgelegte Betriebsfrequenz f bei einer anschließenden Wiederholung des Verfahrens als die spezifizierte Frequenz fₙₒₘ verwendet wird.

Zusätzlich zu der oben beschriebenen Aufgabe des Vergleichens der Ergebnisse Rₙₒₘ und R_{inc} der zwei Testverarbeitungen kann die Überwachungseinheit 3 in an sich bekannter Weise auch noch die Aufgabe des Erfassens eines undefinierten Betriebszustandes oder Absturzes des Mikroprozessors 1 wahrnehmen. Zu diesem Zweck ist die Nutzanwendung so ausgelegt, so dass sie in regelmäßigen Zeitabständen die Erzeugung eines Totmannsignales veranlasst, welches von der Überwachungseinheit 3 empfangen wird. Dieses Totmannsignal kann z. B. ein Lesezugriff auf die oben erwähnte Adresse sein, an welche der Mikroprozessor 1 die Ergebnisse der Testverarbeitung schreibt. Dieses Totmannsignal setzt in der Überwachungseinheit 3 jeweils einen Zeitgeber zurück, dessen Latenzzeit länger als der vorgesehene Zeitabstand zwischen zwei Totmannsignalen ist. Solange die Totmannsignale im vorgesehenen Zeitabstand eintreffen, wird der Zeitgeber regelmäßig zurückgesetzt und kann nicht ablaufen. Wenn im Folge eines Prozessorabsturzes das Totmannsignal ausbleibt und der Zeitgeber abläuft, löst die Überwachungseinheit 3 über eine Resetleitung 8 (Fig. 1) einen Reset des Mikroprozessors 1 aus und veranlasst diesen so, die Nutzanwendung neu zu starten.

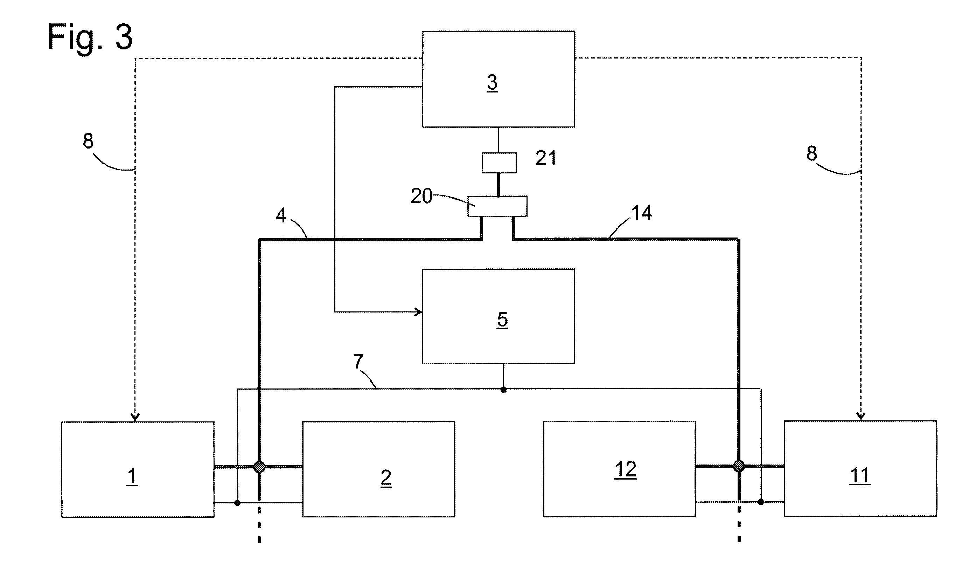

Fig. 3 zeigt eine zweite Ausgestaltung eines erfindungsgemäßen Datenverarbeitungssystems mit zwei Mikroprozessoren 1, 11, die jeweils über einen Daten-/Adressbus 4, 14 mit einem zugeordneten Arbeitsspeicher 2, 12 und gegebenenfalls mit nicht dargestellten Peripherieeinheiten kommunizieren. Ein Datenverarbeitungssystem mit einer solchen Struktur kommt insbesondere bei einem Motorsteuergerät für einen Motor mit sechs oder mehr Zylindern in Betracht, bei welchem die Zylinder in zwei Gruppen aufgeteilt sind, welche jeweils von einem der zwei Prozessoren 1, 11 gesteuert werden. Die Prozessoren 1, 11 empfangen ein Taktsignal von einem gemeinsamen Taktgenerator 5 über eine Taktleitung 7. Die Frequenz des Taktsignals ist gesteuert durch eine ebenfalls beiden Prozessoren 1, 11 gemeinsam zugeordnete Überwachungseinheit 3. Alle Adern der Busse 4, 14, sowohl Daten- als auch Adressleitungen, liegen an einer Bank von XOR-Gattern 20 an, deren Ausgang jeweils genau dann den Wert "wahr" annimmt, wenn sich die Werte auf den zwei homologen Adern der Busse 4, 14, die an den zwei Eingängen eines gleichen Gatters 20 anliegen, unterscheiden. Die Ausgänge der XOR-Gatter 20 sind jeweils mit einem Eingang eines OR-Gatters 21 verbunden, dessen Ausgang folglich immer dann den Wert "wahr" annimmt, wenn sich die Werte auf zwei beliebigen homologen Adern der Busse 4, 14 unterscheiden.

Resetleitungen 8, die die gleiche Funktion wie bei der Ausgestaltung der Fig. 1 erfüllen, können zwischen der Überwachungseinheit 3 und den Prozessoren 1, 11 vorgesehen sein.

Mögliche Arbeitsweisen dieser Ausgestaltung werden im Folgen ebenfalls unter Rückgriff auf Fig. 2 beschrieben.

Einer ersten Alternative zufolge beginnt die Überwachungseinheit 3 die Betriebssicherheitsprüfung, indem sie wie in Schritt S4 die Frequenz des Taktsignals f über eine aktuell im Normalbetrieb verwendete Frequenz fₙₒₘ hinaus erhöht und dann eine Testverarbeitung (S5) durch die Mikroprozessoren 1, 11 ausführen lässt, deren Ergebnisse von der Nutzanwendung nicht benötigt werden, sondern die lediglich der Sicherheitsprüfung dient. Während dieser Verarbeitung vergleichen die Logikgatter 20, 21 fortlaufend die von den Mikroprozessoren 1, 11 erzeugten Daten und Adressen, entsprechend dem Schritt S7 der Fig. 2. Wenn diese Daten und Adressen während der gesamten Testverarbeitung gleich sind, arbeiten beide Prozessoren 1, 11 sicher, und die Taktfrequenz wird in Schritt S8 auf fₙₒₘ zurückgesetzt. Falls jedoch eine Abweichung in einem Datenwert oder einer Adresse auftritt, verzweigt das Verfahren zu Schritt S9, wo die Taktfrequenz herabgesetzt wird, und in Schritt S10 wird, wie bereits oben erläutert, festgelegt, ob und gegebenenfalls welche Funktionen des Anwendungsprogramms gesperrt werden müssen, und gegebenenfalls eine Warnung an den Benutzer ausgegeben.

Da gemäß dieser Ausgestaltung nicht nur Endergebnisse der Testverarbeitung verglichen werden, sondern auch sämtliche Zwischenergebnisse einschließlich der angesprochenen Adressen, wird bei gleicher Anzahl von Programmschritten der Testverarbeitung ein Fehler mit höherer Wahrscheinlichkeit als bei der ersten Ausgestaltung erfasst.

Zusätzlich bietet das Datenverarbeitungssystem der Fig. 3 die Möglichkeit, Fehler der Prozessoren 1, 11 auch dann zu erfassen, wenn diese gleichzeitig identische Anweisungen bei der normalen Taktfrequenz fₙₒₘ ausführen, z. B. in einer Startphase der Nutzanwendung, in welcher für beide Prozessoren 1, 11 identische Initialisierungen vorgenommen werden. Dies erlaubt eine Prüfung der Betriebssicherheit völlig ohne Zeitaufwand.

Prozessoren und Überwachungseinheiten sind in den obigen Beispielen als getrennte Einheiten beschrieben worden. Selbstverständlich können aber auch Prozessoren mit einer in die Prozessorschaltungen integrierten, fest verdrahteten Fehlererkennungsfunktion zum Erkennen von ECC- oder Paritätsfehlern in durch den Prozessor gelesenen Daten zum Einsatz kommen; ein solcher Prozessor kann als Kombination von Prozessor und Überwachungseinheit im Sinne der vorhergehenden Beschreibung aufgefasst werden.

## Patentansprüche

1. Datenverarbeitungssystem mit einer getaktet arbeitenden Ausführungseinheit (1), einem Taktgenerator (5) zum Liefern eines Taktsignals für die Ausführungseinheit (1) und einer Überwachungseinheit (3) zum Überwachen des ordnungsgemäßen Arbeitens der Ausführungseinheit (1), wobei der Taktgenerator (5) eingerichtet ist, das Taktsignal mit einer steuerbaren Frequenz zu liefern und wobei die Überwachungseinheit (3) funktionsmäßig mit dem Taktgenerator (5) verbunden ist, um die Frequenz des Taktsignals herabzusetzen, wenn nichtordnungsgemäßes Arbeiten der Ausführungseinheit (1) festgestellt wird **dadurch gekennzeichnet, dass** die Überwachungseinheit (3) eingerichtet ist, eine Testverarbeitung von der Verarbeitungseinheit bei einer aktuellen Taktrate (fₙₒₘ) und einer gegenüber der aktuellen Taktrate erhöhten Taktrate (fₙₒₘ+Δ) ausführen zu lassen und nichtordnungsgemäßes Arbeiten der Ausführungseinheit festzustellen, wenn das Ergebnis der bei der aktuellen Taktrate durchgeführten Testverarbeitung und das Ergebnis der bei der erhöhten Taktrate (fₙₒₘ+Δ) durchgeführten Testverarbeitung sich unterscheiden.

2. Datenverarbeitungssystem nach Anspruch 1, **dadurch gekennzeichnet, dass** die Überwachungseinheit (3) eine Watchdog-Einheit umfasst, die nichtordnungsgemäßes Arbeiten der Ausführungseinheit feststellt, wenn ein Funktionssignal von der Ausführungseinheit in einer vorgegebenen Zeitspanne ausbleibt.

3. Datenverarbeitungssystem nach Anspruch 1 oder 2, **dadurch gekennzeichnet, dass** die Überwachungseinheit (3) programmtechnisch in der Ausführungseinheit (1) implementiert ist.

4. Datenverarbeitungssystem mit einer getaktet arbeitenden Ausführungseinheit (1), einem Taktgenerator (5) zum Liefern eines Taktsignals für die Ausführungseinheit (1) und einer Überwachungseinheit (3) zum Überwachen des ordnungsgemäßen Arbeitens der Ausführungseinheit (1), wobei der Taktgenerator (5) eingerichtet ist, das Taktsignal mit einer steuerbaren Frequenz zu liefern und wobei die Überwachungseinheit (3) funktionsmäßig mit dem Taktgenerator (5) verbunden ist, um die Frequenz des Taktsignals herabzusetzen, wenn nichtordnungsgemäßes Arbeiten der Ausführungseinheit (1) festgestellt wird **dadurch gekennzeichnet, dass** die Überwachungseinheit (3, 11, 20, 21) eine zweite Ausführungseinheit (11) und Mittel (20, 21) zum Vergleichen der Verarbeitungsergebnisse der zwei Ausführungseinheiten (1,11) umfasst und eingerichtet ist, nichtordnungsgemäßes Arbeiten bei Nichtübereinstimmung der Ergebnisse festzustellen, dass der Taktgenerator (5) eingerichtet ist, die Taktrate zeitweilig über eine aktuelle Taktrate zu erhöhen (S4) und bei Feststellung von nichtordnungsgemäßem Arbeiten bei der erhöhten Taktrate die Taktrate unter besagte aktuelle Taktrate abzusenken (S9).

5. Datenverarbeitungssystem nach einem der vorhergehenden Ansprüche, **dadurch gekennzeichnet, dass** sie Mittel zum Ausgeben eines Warnsignals bei Absenkung der Taktrate unter eine untere Grenze verfügt.

6. Datenverarbeitungssystem nach einem der vorhergehenden Ansprüche, **dadurch gekennzeichnet, dass** die Ausführungseinheit (1) ferner eingerichtet ist, eine Nutzanwendung auszuführen, die eine Mehrzahl von Funktionen umfasst, wobei die Ausführung wenigstens einer der Funktionen in Abhängigkeit von der aktuellen Taktrate des Systems freigegeben oder nicht freigegeben ist.

7. Datenverarbeitungssystem nach einem der vorhergehenden Ansprüche, **dadurch gekennzeichnet, dass** es ein Kfz-Steuergerät ist.

8. Verfahren zum Betreiben einer getaktet arbeitenden Ausführungseinheit (1) eines Datenverarbeitungssystems nach einem der vorhergehenden Ansprüche, bei dem die Ausführungseinheit (1) auf ordnungsgemäßes Arbeiten bei einer hohen Taktrate geprüft (S4-S7) und die Taktrate gesenkt wird (S9), wenn nichtordnungsgemäßes Arbeiten der Ausführungseinheit festgestellt wird, wobei die Prüfung regelmäßig wiederholt wird.

9. Verfahren nach Anspruch 8, **dadurch gekennzeichnet, dass** die Prüfung jeweils beim Ein- und/oder Ausschalten des Datenverarbeitungssystems vorgenommen wird.

10. Verfahren nach Anspruch 8, **dadurch gekennzeichnet, dass** die Prüfung periodisch während des Betriebs des Datenverarbeitungssystems vorgenommen wird.

## Claims

1. Data processing system comprising an execution unit (1) that operates in a clocked manner, a clock generator (5) for supplying a clock signal for the execution unit (1) and a monitoring unit (3) for monitoring the proper operation of the execution unit (1), wherein the clock generator (5) is designed for supplying the clock signal with a controllable frequency, and wherein the monitoring unit (3) is functionally connected to the clock generator (5) in order to lower the frequency of the clock signal if improper operation of the execution unit (1) is established, **characterized in that** the monitoring unit (3) is designed to instigate execution of a test processing by the processing unit at a current clock rate (fₙₒₘ) and an increased clock rate (fₙₒₘ+Δ) relative to the current clock rate and to establish improper operation of the execution unit if the result of the test processing carried out at the current clock rate and the result of the test processing carried out at the increased clock rate (fₙₒₘ+Δ) differ.

2. Data processing system according to Claim 1,
**characterized in that** the monitoring unit (3) comprises a watchdog unit, which establishes improper operation of the execution unit if a functional signal fails to appear from the execution unit in a predetermined time period.

3. Data processing system according to Claim 1 or 2, **characterized in that** the monitoring unit (3) is implemented program-technologically in the execution unit (1).

4. Data processing system comprising an execution unit (1) that operates in a clocked manner, a clock generator (5) for supplying a clock signal for the execution unit (1) and a monitoring unit (3) for monitoring the proper operation of the execution unit (1), wherein the clock generator (5) is designed for supplying the clock signal with a controllable frequency, and wherein the monitoring unit (3) is functionally connected to the clock generator (5) in order to lower the frequency of the clock signal if improper operation of the execution unit (1) is established, **characterized in that** the monitoring unit (3, 11, 20, 21) comprises a second execution unit (11) and means (20, 21) for comparing the processing results of the two execution units (1, 11) and is designed to establish improper operation when the results do not correspond, **in that** the clock generator (5) is designed to increase (S4) the clock rate temporarily above a current clock rate and, in the event of improper operation being established at the increased clock rate, to lower (S9) the clock rate below said current clock rate.

5. Data processing system according to any of the preceding claims, **characterized in that** it has means for outputting a warning signal when the clock rate is lowered below a lower limit.

6. Data processing system according to any of the preceding claims, **characterized in that** the execution unit (1) is furthermore designed to execute a useful application comprising a plurality of functions, wherein the execution of at least one of the functions is enabled or not enabled depending on the current clock rate of the system.

7. Data processing system according to any of the preceding claims, **characterized in that** it is a motor vehicle control unit.

8. Method for operating an execution unit (1) - that operates in a clocked manner - of a data processing system as claimed in any of the preceding claims, in which the execution unit (1) is tested (S4-S7) with regard to proper operation at a high clock rate and the clock rate is lowered (S9) if improper operation of the execution unit is established, wherein the test is repeated regularly.

9. Method according to Claim 8, **characterized in that** the test is performed in each case when the data processing system is switched on and/or off.

10. Method according to Claim 8, **characterized in that** the test is performed periodically during operation of the data processing system.

## Revendications

1. Système de traitement de données comportant une unité d'exécution (1) fonctionnant de manière cadencée, un générateur de cadence (horloge) (5) pour fournir un signal de cadence à l'unité d'exécution (1) et une unité de surveillance (3) pour surveiller le fonctionnement correct de l'unité d'exécution (1),
le générateur de cadence (5) étant conçu pour fournir le signal de cadence à une fréquence commandée, et
l'unité de surveillance (3) est reliée fonctionnellement au générateur de cadence (5) pour abaisser la fréquence du signal de cadence lorsqu'on constate un fonctionnement non correct de l'unité d'exécution (1),
**caractérisé en ce que**
l'unité de surveillance (3) est conçue pour exécuter un traitement de test de l'unité de travail pour une cadence actuelle (fₙₒₘ) et une cadence (fₙₒₘ+Δ) augmentée par rapport à la cadence actuelle, et détecter un fonctionnement non correct de l'unité d'exécution si le résultat du traitement du test effectué à la cadence actuelle et le résultat du traitement du test effectué à la cadence augmentée (fₙₒₘ+Δ) diffèrent l'un de l'autre.

2. Système de traitement de données selon la revendication 1,
**caractérisé en ce que**
l'unité de surveillance (3) comprend une unité de chien de garde qui constate un fonctionnement non correct de l'unité d'exécution si un signal fonctionnel de l'unité d'exécution a disparu pendant une durée prédéfinie.

3. Système de traitement de données selon la revendication 1 ou 2,
**caractérisé en ce que**
l'unité de surveillance (3) est implémentée sous forme de programme dans l'unité d'exécution (1).

4. Système de traitement de données comportant une unité d'exécution (1) fonctionnant de manière cadencée, un générateur de cadence (5) pour fournir un signal de cadence à l'unité d'exécution (1) et une unité de surveillance (3) pour surveiller le fonctionnement correct de l'unité d'exécution (1), le générateur de cadence (5) étant conçu pour fournir le signal de cadence à une fréquence commandée, et
l'unité de surveillance (3) est reliée fonctionnellement au générateur de cadence (5) pour abaisser la fréquence du signal de cadence si un travail non correct est constaté sur l'unité d'exécution (1),
**caractérisé en ce que**
l'unité de surveillance (3, 11, 20, 21) comporte une seconde unité d'exécution (11) et des moyens (20, 21) pour comparer les résultats des travaux des deux unités d'exécution (1, 11), et constater un travail non correct en cas de non concordance des résultats,
le générateur de cadence (5) étant conçu pour augmenter la cadence provisoirement par rapport à la cadence actuelle (S4) et en cas de constatation de fonctionnement non correct pour une cadence augmentée, on diminue la cadence en dessous de la cadence actuelle (S9).

5. Système de traitement de données selon les revendications précédentes,
**caractérisé en ce qu'**
il comporte des moyens pour émettre un signal avertisseur lorsqu'on abaisse la cadence en dessous d'une limite inférieure.

6. Système de traitement de données selon les revendications précédentes,
**caractérisé en ce que**
l'unité d'exécution (1) est en outre conçue pour exécuter une application comprenant un ensemble de fonctions,
l'exécution d'au moins l'une des fonctions étant libérée ou bloquée selon la cadence actuelle du système.

7. Système de traitement de données selon les revendications précédentes,
**caractérisé en ce qu'**
il s'agit d'un appareil de commande d'un véhicule automobile.

8. Procédé de gestion d'une unité d'exécution (1) fonctionnant de manière cadencée, d'un système de traitement de données selon les revendications précédentes,
selon lequel
on vérifie le travail correct de l'unité d'exécution (1) à une cadence élevée (S4-S7) et on abaisse la cadence (S9) si l'on constate que l'unité d'exécution ne travaille pas correctement, la vérification étant répétée régulièrement.

9. Procédé de gestion selon la revendication 8,
**caractérisé en ce qu'**
on effectue la mise en marche et/ou l'arrêt du système de traitement de données.

10. Procédé de gestion selon la revendication 8,
**caractérisé en ce qu'**
on effectue périodiquement le contrôle pendant le fonctionnement du système de traitement de données.
